(19)

**Europäisches Patentamt**
**European Patent Office**
**Office européen des brevets**

(11) **EP 4 664 773 A1**

(12) **EUROPEAN PATENT APPLICATION**

(43) Date of publication:
**17.12.2025 Bulletin 2025/51**

(21) Application number: **25169127.5**

(22) Date of filing: **08.04.2025**

(51) International Patent Classification (IPC):
**H04B 1/525** (2015.01)

(52) Cooperative Patent Classification (CPC):
**H04B 1/525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.06.2024 US 202418743124**

(71) Applicant: **Intel Corporation**
**Santa Clara, CA 95054 (US)**

(72) Inventors:
• **AVRAHAM, Oren Ezra**
**Givat Shmuel (IL)**

• **BANIN, Elan**
**43606 Raanana (IL)**
• **DEGANI, Ofir**
**22801 Nes-Ammin (IL)**
• **KRISHNAMURTHY, Sashank**
**Hillsboro (US)**
• **RAVI, Ashoke**
**Portland, 97219 (US)**

(74) Representative: **Viering, Jentschura & Partner mbB**
**Patent- und Rechtsanwälte**
**Am Brauhaus 8**
**01099 Dresden (DE)**

(54) **POST-DISTORTION SCHEME FOR A DUAL-RADIO WIDEBAND RECEIVER**

(57) Disclosed herein are devices, systems, and methods for applying a post-distortion scheme to recover a desired signal from a received signal. The device includes processing circuitry connected to storage, where the processing circuitry causes one or more antennas to simultaneously transmit a transmitted signal and receive a received signal, wherein the received signal comprises a desired signal to be recovered from the received signal. The processing circuitry also causes a gain block to amplify the received signal and a leaked portion of the transmitted signal into an amplified composite signal. The processing circuitry also determines a distortion of the gain block on the received signal based on the transmitted signal. The processing circuitry also applies to the amplified composite signal an inversion of the distortion to recover the desired signal from the received signal.

FIG. 8

## Description

### Technical Field

The disclosure relates generally to wireless communication systems, and in particular, to devices, systems, and methods for applying a post-distortion correction to account for transmitter interference in a dual-radio wideband receiver.

### Background

In wireless communication systems, some radio equipment (such as mobile devices, infrastructure, etc.) are dual-radio devices, meaning that one or multiple antennas of the device may support simultaneous transmitting (TX) and receiving (RX) of wireless signals within the same wireless frequency band. Even though the received signal is located on a different channel (the RX-channel) from the transmitted signal (on the TX-channel), there may still be significant leakage of the transmitted signal into the received signal path, which may decrease the sensitivity, quality, and/or reliability of the receiver. This is because the power level of the transmitted signal (and, in particular, the leaked transmitted signal) may be much higher than the desired signal to be received, causing significant interference to the received signal and leading to difficulty in recovering the desired signal.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:

FIG. 1 shows an example of a leakage between simultaneously transmitting and receiving of signals that may adversely impact signal processing to recover a desired signal from the received signal;
FIG. 2 shows an example of self-interference-cancelation (SIC), where an inverted version of the TX signal may be injected into the RX path before the gain block (GM);
FIG. 3 illustrates an example of a dual-radio device along with a series of frequency spectra that show how distortion from a transmitted signal may impact both the desired signal and the leaked portion the transmitted signal;
FIG. 4 shows a detailed spectral view of a composite signal that includes a desired signal that has been distorted by a leaked transmitted signal; and
FIG. 5 illustrates an example of a dual-radio device that applies a post-distortion (PD) scheme that determines non-linearities in the gain block based on the transmitted signal in order to recover the desired signal;
FIG. 6 illustrates example graph of simulation results that use different schemes to recover a desired signal when there is a strong blocker in the RX chain;
FIG. 7 depicts an example schematic drawing of a device for applying a post distortion scheme to recover a desired signal from a received signal; and
FIG. 8 depicts a schematic flow diagram of an exemplary method for applying a post-distortion scheme to recover a desired signal from a received signal.

### Description

The following detailed description refers to the accompanying drawings that show, by way of illustration, exemplary details and features.
The word "exemplary" is used herein to mean "serving as an example, instance, or illustration." Any aspect or design described herein as "exemplary" is not necessarily to be construed as preferred or advantageous over other aspects or designs.
Throughout the drawings, it should be noted that like reference numbers are used to depict the same or similar elements, features, and structures, unless otherwise noted.
The phrase "at least one" and "one or more" may be understood to include a numerical quantity greater than or equal to one (*e.g.,* one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.
The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (*e.g.,* two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, *e.g.,* provided as a file, a portion of a file, a set of files, a signal or stream, a portion of a signal or stream, a set of signals or streams, and the like. Further, the term "data" may also be used to mean a reference to information, e.g., in the form of a pointer. The term "data", however, is not limited to the aforementioned examples and may take various forms and represent any information as understood in the art.

The terms "processor" or "controller" as, for example, used herein may be understood as any kind of technological entity (e.g., hardware, software, and/or a combination of both) that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, software, firmware, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer- readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint™, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as radio frequency (RF) transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both "direct" calculations via a mathematical expression/formula/relationship and 'indirect' calculations via lookup or hash tables and other array indexing or searching operations. References to the TX/RX "chain" or "path" refer to the series of processing steps to convert, modulate, amplify, filter, etc. the data signal to be transmitted (along the TX path) from the antenna or to the series of processing steps to convert, modulate, amplify, filter, etc. the desired signal (along the RX path) that is to be recovered from the received signal at the antenna. References to a "desired" signal refer to the predefined signal that is to be received by the communication device at the prescribed time.

As noted above, dual-radio devices may support simultaneous transmitting (TX) and receiving (RX) of wireless signals within the same wireless frequency band and on the same antenna or on multiple antennas. However, a portion of the TX wireless signal may leak into the RX path. Because the power level of the transmitted signal (and the portion of the leaked transmitted signal that enters the RX path) may be much higher than the desired signal to be received, the TX wireless signal may cause significant interference on the received signal, which may decrease the sensitivity, quality, and/or reliability of the receiver.

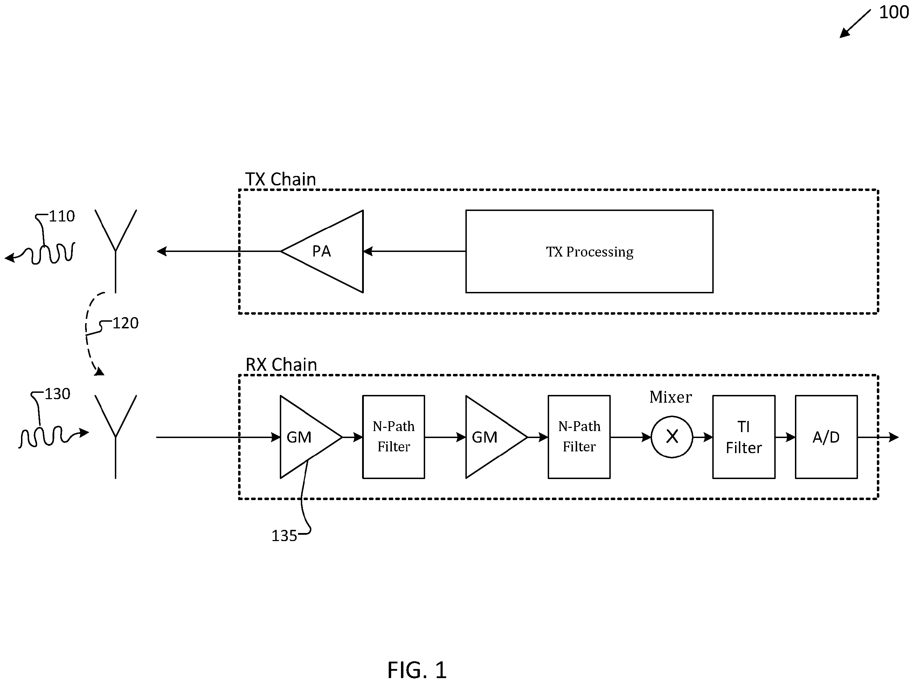

An example of this problem is shown in FIG. 1, where a device 100 simultaneously transmits a transmitted signal while it receives a desired signal on a different channel. Even with good isolation between the transmitter and the receiver, some portion of the TX signal 110 is likely to leak into the RF chain (via leakage signal 120), corrupting the recovery of the desired signal 130 from the received signal path. Because the leakage signal 120 enters the RX chain before the initial gain module (GM or also referred to as a "gain medium" or "gain block") 135, the various processing stages of the RX chain may be impacted, including the N-path filter, the subsequent GM(s), the subsequent N-path filter(s), the mixer, the transimpedance filter/amplifier (TI-filter), the analog to digital converter (A/D converter), etc.

Conventional solutions for addressing such interference from a simultaneously transmitted signal often involve improving the isolation between the TX and the RX. This type of TX-RX isolation is often expensive, however, because it requires expensive analog filters such as bulk acoustic wave (BAW) filters/diplexers. Not only may these devices introduce a very high cost to the bill of materials, they may also have a high insertion loss, degrading overall TX and RX performance. Another conventional solution may include tunable filters that may be tuned to a narrow bandwidth that is specific to the transmitted/received frequency channels. Such fine frequency tuning, however, increases power inefficiency and noise of the transmit and receive paths. Another conventional solution may include a highly linear gain module (GM gain block) that has high dynamic-range. Such a highly linear amplifier, however, may be very inefficient in terms of power consumption, may require a relatively large chip area (e.g., a higher cost to produce and to include in a circuit layout), and may introduce thermal issues.

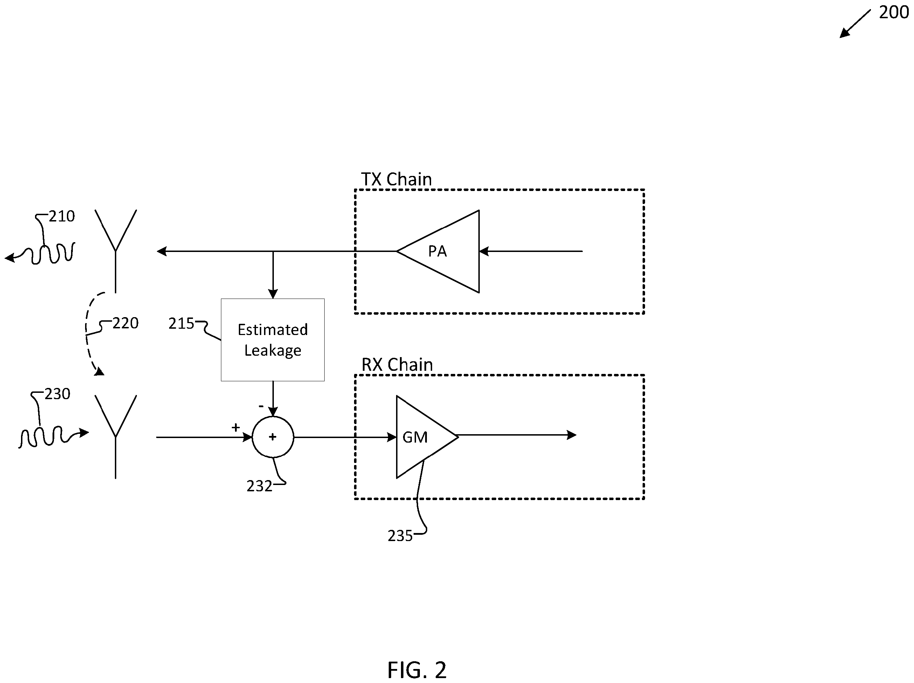

Another conventional solution may include self-interference-cancelation (SIC), where an inverted version of the TX signal may be injected into the RX path before the GM (e.g., having an opposite phase to account for what leaks from the TX into the RX path) such that the interference is canceled out. An example of this is shown in FIG. 2, where device 200 determines an estimated leakage 215 into the RX path from transmitted signal 210 of the TX path. The idea behind SIC is that the estimated leakage 215 represents the actual leakage 220 from the TX chain that it expects will leak into the RX chain. In order cancel this out of the RX path (which is now a composite signal that contains the desired signal 230 plus the leakage signal 220), the inverse of the estimated leakage may be added to the received signal at signal combiner 232.

If the estimated leakage 215 correctly estimates the actual leakage 220 that has leaked into the RX path, then the leakage will be canceled and its corruption within the RX chain avoided. However, there may be several problems with this SIC approach. First, correctly estimating the actual leakage 220 may be difficult because the actual leakage 220 may be sensitive to changes in the leakage path. For the cancelation to work, the estimated leakage 215 must be at exactly 180° offset from the phase of the actual leakage 220 at the radio frequency (RF) rate. However, a small change in the leakage path (for example due to moving the device) may corrupt the cancelation and require recalibration. Second, it may be difficult to drive the correction signal (e.g., providing an equal and opposite signal of the leakage into the signal combiner 232) without introducing unacceptable noise. An additional driver to provide this inverted signal at the beginning of the RX chain may degrade the noise-figure in the RX path. Thus, this type of pre-gain stage, self-interference canceling may not be fully effective and/or may not be robust in changing conditions.

Instead of attempting to cancel to the leaked portion of the transmit signal (also called a "blocker," in view of its aggregation with the desired signal within the RX path) before the initial GM, the impact of the blocker may be accounted for after the initial GM (also called post-distortion correction). However, if the blocker is strong compared to the desired signal, and if the leaked portion of the transmit signal is not cancelled before the initial GM, the initial GM amplification stage may need to ah have a high dynamic range in order to receive the desired signal in the presence of such a strong blocker. The downside is that a power-efficient GM amplifier with high dynamic range may have inherent non-linearities (also called "INL" that may cause amplitude modulation-amplitude modulation ("AMAM") distortion or amplitude modulation-phase modulation ("AMPM" distortion)). In a dual-radio scenario with simultaneous transmitting and receiving, the non-linearities may cause different types of distortion as compared to single-radio INL, and the dual-radio non-linearities may require a dedicated correction approach, as discussed in more detail below.

As recognized in the post-distortion scheme disclosed in more detail below, in the RX-chain, the blocker signal may eventually be filtered out before the digital conversion takes place in the A/D, but the remaining desired signal may be distorted in a way that is based on the blocker (e.g., as opposed to being distorted based on the desired signal itself). In addition, due to the non-linear nature of the distortion, the disclosed post-distortion scheme may account for cross-modulations that impact the distortion. Finally, the disclosed post-distortion scheme may account for the challenges due to the channel-selective filter, where INL may increase the bandwidth (BW) of the signal and a channel-selective filter may remove some of the out-of-band information. In other words, the disclosed post-distortion scheme does not simply invert the INL to remove its effects because this may not necessarily restore the original signal (desired signal). By contrast, the disclosed post-distortion (PD) scheme is able to handle the crossover effects that occur as between the blocker and the desired signal. In addition, the disclosed PD scheme may be able to avoid losing information that may otherwise be caused by the channel-selective-filtering. As a result, the disclosed PD scheme may provide high performance for dual-radio devices at an improved cost.

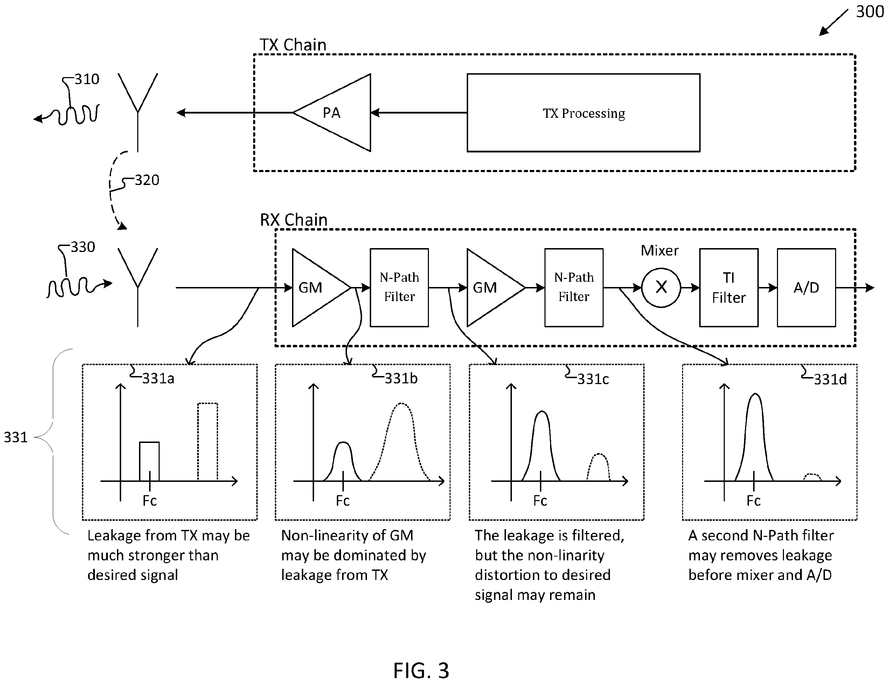

FIG. 3 shows an example dual-radio device 300 that depicts how the composite signal (made up of the leaked portion 320 of the transmitted signal 310 along with the desired signal 330). A series of frequency spectra 331 show examples of how the distortion impacts both the desired signal 330 (shown as a solid line centered around its center frequency $F_c$) and the leaked portion 320 of the transmitted signal 310 (shown as a dotted line centered at a different frequency to the right of $F_c$). Before the composite signal reaches the GM in the RX chain (shown in spectrum 331a), the magnitude of the leaked portion 320 of the transmitted signal 310 may be larger than the desired signal 330, meaning that the GM may need to have a sufficiently large dynamic range for both signals. After the GM, the INL of the GM may cause distortion in both the leaked portion 320 and the desired signal 330, which causes the "skirts" around each of these signals, as depicted in spectrum 331b. As recognized by the PD scheme disclosed herein, the distortions may be primarily due to the leaked portion 320, which is larger than the desired signal 330, as both signals (e.g., the aggregated or composite signal) are amplified in the GM. After the N-path filter, as shown in spectrum 331c, the leaked portion 320 is filtered so as to reduce its magnitude, but the non-linearity effects it caused to the desired signal 330 remain. After another GM and another N-path filter, the leaked portion 320 may be further reduced before the mixer, as shown in spectrum 331d.

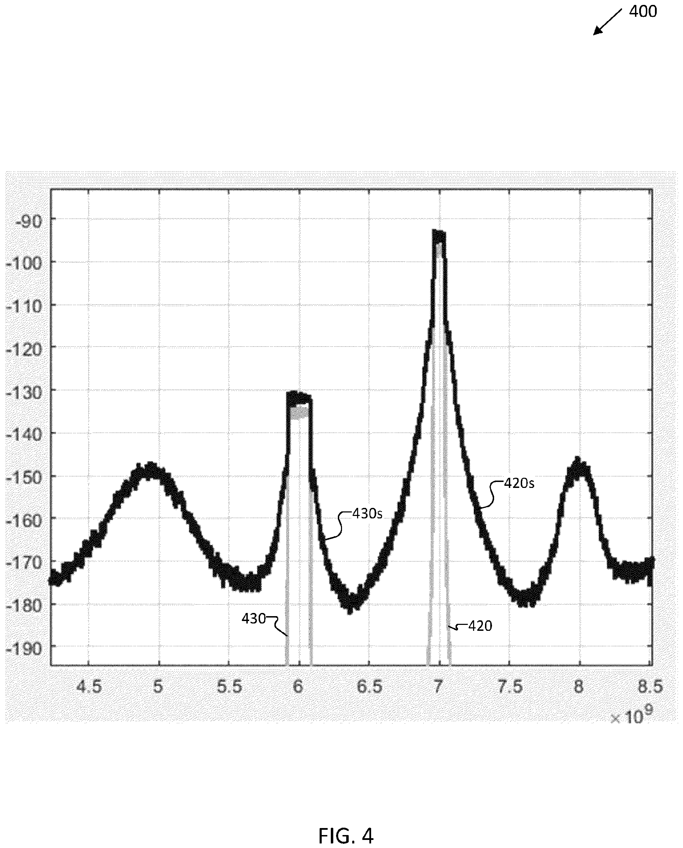

The disclosed PD scheme may remove the distortion from the processed aggregated signal-after the filtering, the down conversion from the mixer, and the further filtering, which should leave the distorted version of the desired signal 230 from which the desired signal 230 is to be recovered. FIG. 4 shows a more detailed view of the aggregated signal post-distortion (e.g., caused primarily in the GM and after other processing steps). In this non-limiting example, the desired signal 430 may have a center frequency of about 6 GHz and the leaked portion 420 of the transmitted signal may be at around 7 GHz. The "skirts" 420s and 430s around the signals may be due to the INL of the GM, caused primarily by the leaked portion 420 of the transmitted signal. The disclosed PD scheme aims to correct these distortions in a post-distortion stage (e.g., after the analog signals have been converted to a digital representation by the analog-to-digital converter), where the distortions (and the inverse thereof) may be based on the transmitted signal.

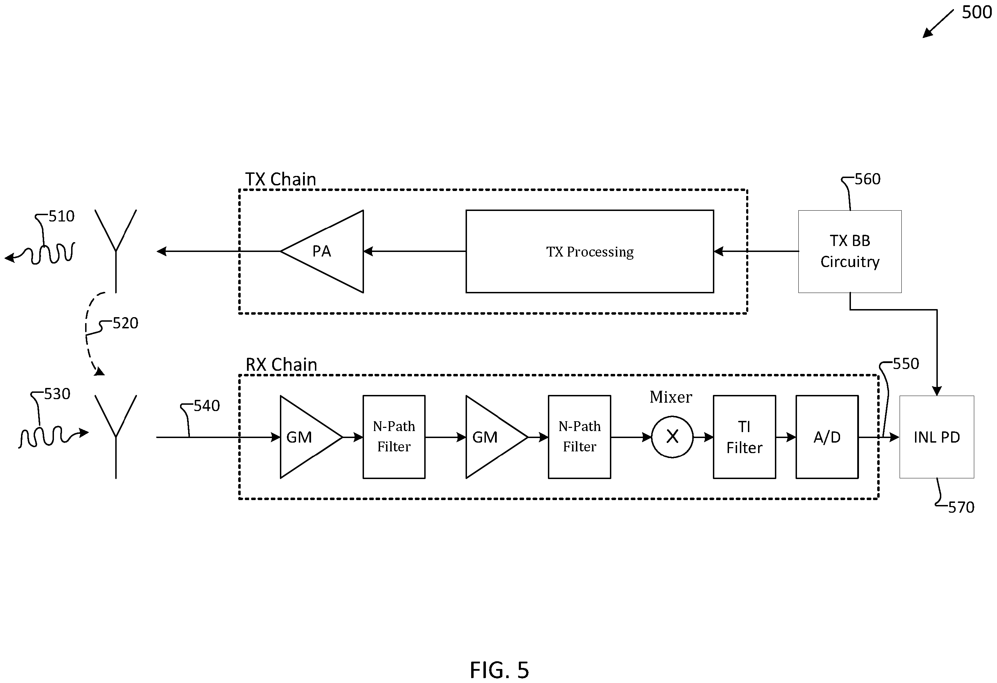

Because the transmitted signal is known by the device (as noted, in a dual-radio system, the RX and TX are in the same device and may share the same antenna (or may share multiple antennas), and, thus, the transmitted signal is already known). As such, a baseband version of the transmitted signal may be shared with the receiver to be used for estimating the leaked portion of the transmitted signal and its non-linearity impact on the desired signal within the GM. The PD scheme may then use these estimates for post-distortion correction of the (distorted) received signal in order to recover the desired signal. An example of this post-distortion correction is shown in FIG. 5, which shows dual-radio device 500 (e.g., as part of a wireless transceiver system) that transmits a transmitted signal 510 simultaneously with receiving a desired signal 530. A composite signal 540 that is actually received at the beginning of the RX chain therefore includes a leaked portion 520 of the transmitted signal 510 and the desired signal 530. This composite signal 540 is processed through the RX chain, which causes distortions due to the presence of the leaked portion 520 and the non-linearity of the GM, into a processed composite signal 550. A post-distortion circuit 570 applies an inversion of the distortion to the processed composite signal 550, where the calculations of the distortions are based on the transmitted signal 510, provided from the baseband transmitter circuitry 560 (e.g., a TX baseband modem) to recover the desired signal 530.

The desired signal 530 may be approximated, using the disclosed PD scheme that takes into account the INL (which is dominated by the leaked portion 520 of the transmitted signal 510) and the filters, with the following equation, where $\hat{x}_d$ is an estimate of the desired signal $x_d$:

$$\hat{x}_d = \frac{y}{\left(g(|x_b|) \cdot \left(1 + \frac{j}{2} \cdot g'_{\varphi}(|x_b|) \cdot |x_b|\right) + g'_A(|x_b|) \cdot |x_b| \cdot \frac{1}{2} \cdot e^{j \cdot g_{\varphi}(|x_b|)}\right)}$$

In the above equation, observed samples $y(t)$ are a result of the input signal $x(t)$ going thorough non-linearity and low pass filter (LPF) (e.g., from the gain block(s) (GM) and n-order filter(s)) along the RX chain, where $y(t) = LPF\{f_{INL}(x(t))\}$. The non-linearity function can be split into AMAM ($g_A(\cdot)$) and AMPM ($g_{\varphi}(\cdot)$):

$$f_{INL}(x) = g(|x|) \cdot x = g_A(|x|) \cdot e^{j \cdot g_{\varphi}(|x|)} \cdot x$$

As noted above, the received signal (x) is a combined signal that includes the desired signal ($x_d$) and the leaked portion of the transmitted signal ($x_b$):

$$x = x_d + x_b$$

More particularly, samples $y(t)$ may be understood as a result of the input signal $x(t)$ going thorough non-linearity and LPF:

$$y(t) = LPF\{f_{INL}(x(t))\} \triangleq LPF(z(t))$$

As this type of PD scheme is performed in the base-band, the signals are complex and are relative to the center frequency of the desired signal to be recovered. The non-linearity may be a function of the desired signal's envelope and may be written as:

$$f_{INL}(x) = g(|x|) \cdot x = g_A(|x|) \cdot e^{j \cdot g_\varphi(|x|)} \cdot x$$

In the equation above, $g(|x|)$ is a real-to-complex function representing the distortion due to INL. In addition, $g_A(|x|)$ and $g_\varphi(|x|)$ are real-to-real functions representing AMAM and AMPM respectively.

As noted above, x is a combined signal (sum) of the desired signal and the leaked portion of the transmitted signal:

$$x = x_d + x_b \triangleq |x_d| \cdot e^{j\varphi_d} + |x_b| \cdot e^{j\varphi_b + j\omega_\Delta t}$$

In the equation above, $\varphi_d$ and $\varphi_b$ are the BB phase of the signals, and $\omega_\Delta$ is the offset between their carriers.

$$z = g(|x|) \cdot x = g(|x_b + x_d|) \cdot (x_b + x_d)$$

Using a first order Taylor series, around the point $x = x_b$, the result is:

$$z = g(|x|) \cdot x \approx \left( g(|x_b|) + g'(|x_b|) \cdot (|x| - |x_b|) \right) \cdot x$$

Assuming $|x_b| \gg |x_d|$, the factor $|x| - |x_b|$ may be replaced with:

$$|x_d| \cdot \frac{1}{2} \cdot \left( e^{j(\varphi_d - \varphi_b - \omega_\Delta t)} + e^{-j(\varphi_d - \varphi_b - \omega_\Delta t)} \right),$$

where

$$|x| = \left| |x_d| \cdot e^{j\varphi_d} + |x_b| \cdot e^{j\varphi_b + j\omega_\Delta t} \right| = \left| |x_b| + |x_d| \cdot e^{j(\varphi_d - \varphi_b - \omega_\Delta t)} \right|;$$

$$\left| |x_b| + |x_d|(cos + jsin) \right| = \sqrt{(|x_b| + |x_d| \cos(\dots))^2 + (|x_d| \sin(\dots))^2} \approx$$

$$\sqrt{(|x_b| + |x_d| \cos(\dots))^2};$$

$$|x| \approx |x_b| + |x_d| \cdot \cos(\varphi_d - \varphi_b - \omega_\Delta t);$$

$$|x| \approx |x_b| + |x_d| \cdot \frac{1}{2} \cdot \left( e^{j(\varphi_d - \varphi_b - \omega_\Delta t)} + e^{-j(\varphi_d - \varphi_b - \omega_\Delta t)} \right);$$

and

$$z \approx \left( g(|x_b|) + g'(|x_b|) \cdot \left( |x_d| \cdot \frac{1}{2} \cdot \left( e^{j(\varphi_d - \varphi_b - \omega_\Delta t)} + e^{-j(\varphi_d - \varphi_b - \omega_\Delta t)} \right) \right) \right) \cdot x$$

When x is replaced with $|x_d| \cdot e^{j\varphi d} + |x_b| \cdot e^{j\varphi b + j\omega_\Delta t}$, and opening brackets, this leaves:

$$z = \boldsymbol{g}(|\boldsymbol{x_b}|) \cdot \boldsymbol{x_b} + g(|x_b|) \cdot x_d + \boldsymbol{g'}(|\boldsymbol{x_b}|) \cdot |\boldsymbol{x_d}|^2 \cdot \frac{1}{2} \cdot \boldsymbol{e}^{j(2\varphi_d - \varphi_b - \omega_\Delta t)} + \boldsymbol{g'}(|\boldsymbol{x_b}|) \cdot |\boldsymbol{x_d}|^2$$

$$\cdot \frac{1}{2} \cdot \boldsymbol{e}^{j(\varphi_b + \omega_\Delta t)} + g'(|x_b|) \cdot |x_b| \cdot \frac{1}{2} \cdot x_d + \boldsymbol{g'}(|\boldsymbol{x_b}|) \cdot |\boldsymbol{x_d}| \cdot |\boldsymbol{x_b}|$$

$$\cdot \frac{1}{2} \cdot \boldsymbol{e}^{j(-\varphi_d + 2\varphi_b + 2\omega_\Delta t)}$$

Note that all the factors in bold above may be centered around a higher frequency than the center frequency and are expected to be dropped after the LPF. Thus, this may be simplified to:

$$y = LPF(z) = g(|x_b|) \cdot x_d + g'(|x_b|) \cdot |x_b| \cdot \frac{1}{2} \cdot x_d = \left( g(|x_b|) + \frac{1}{2} \cdot g'(|x_b|) \cdot |x_b| \right) \cdot x_d$$

Calculating the derivative of $g$ may be done by representing it with its AMAM/AMPM components:

$$g'(|x_b|) = \frac{\partial}{\partial |x_b|} \left( g_A(|x_b|) \cdot e^{j \cdot g_\varphi(|x_b|)} \right)$$

$$= g'_A(|x_b|) \cdot e^{j \cdot g_\varphi(|x_b|)} + g_A(|x_b|) \cdot e^{j \cdot g_\varphi(|x_b|)} \cdot j \cdot g'_\varphi(|x_b|)$$

Substituting this in the equation above gives:

$$y = x_d \cdot \left( g(|x_b|) \cdot \left( 1 + \frac{j}{2} \cdot g'_\varphi(|x_b|) \cdot |x_b| \right) + g'_A(|x_b|) \cdot |x_b| \cdot \frac{1}{2} \cdot e^{j \cdot g_\varphi(|x_b|)} \right)$$

To estimate $x_d$ from the observations, the PD scheme may estimate AMAM/AMPM (e.g., in an initial calibration) side information on the transmitted blocker signal ($x_b$), using this equation:

$$\hat{x}_d = \frac{y}{\left( g(|x_b|) \cdot \left( 1 + \frac{j}{2} \cdot g'_\varphi(|x_b|) \cdot |x_b| \right) + g'_A(|x_b|) \cdot |x_b| \cdot \frac{1}{2} \cdot e^{j \cdot g_\varphi(|x_b|)} \right)}$$

As should be understood, the equations given above are exemplary, and other mathematical calculations, formulas, and equations may be used for the disclosed PM scheme.

The disclosed PM scheme was simulated using expected AMAM/AMPM curves and noise-figure (vs. power) taken from an analog design model of a dual-radio system. In this simulation, the bandwidth (BW) of the desired signal and leaked portion of the simultaneously transmitted signal (blocker) are 80 MHz and 160 MHz respectively. The frequency offset between desired signal and leaked portion of the simultaneously transmitted signal is 1 GHz (between centers). The power level of the desired signal is at -52 dBm/Hz which is a typical requirement for modulation coding scheme MCS13.

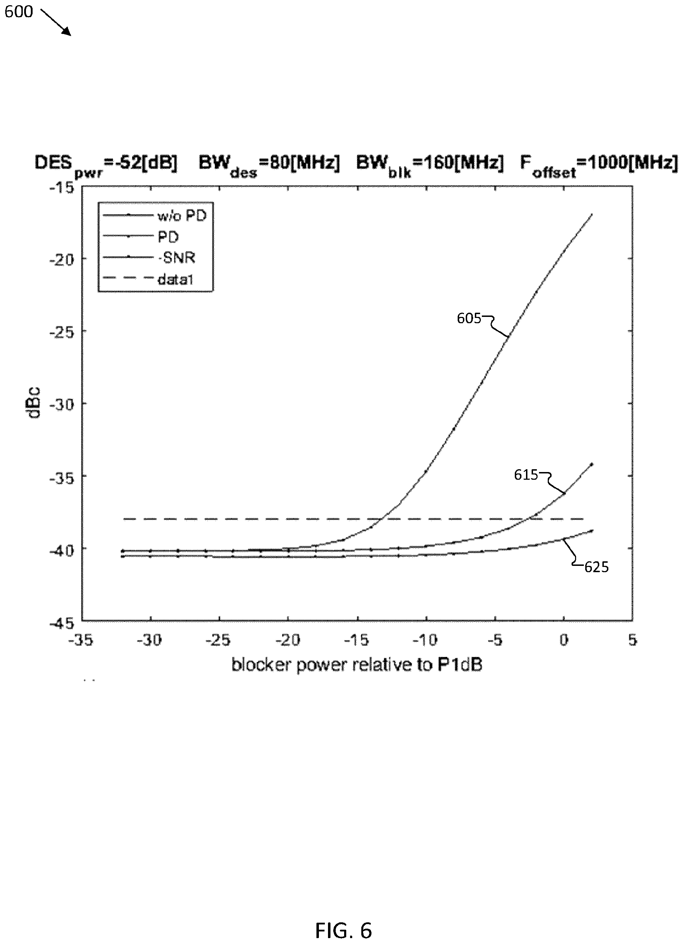

FIG. 6 plots the results of the simulation in graph 600, where when the RX chain is presented with a strong blocker (e.g., the leaked portion of the transmitted signal) in addition to the desired signal, the error vector magnitude (EVM) performance degrades as the blocker gets stronger. In FIG. 6, EVM is plotted as a function of the power of the blocker (in units of dB, relative to the P1dB point of the gain block's (GM's) non-linearity). Curve 605 plots the effects without applying the PD scheme. Curve 615 plots the effects using the above-disclosed PD scheme. As can been seen, the PD scheme may tolerate a much stronger blocker. In this simulated example, at the -38 dB EVM point, the PD scheme may tolerate a 15 dB stronger blocker than without using the PD scheme. Curve 625 plots the theoretical limit, bounded by the thermal noise, which includes an increased noise-figure at higher amplitudes.

In order to calibrate the PD scheme for AMAM and AMPM, the PD scheme may take advantage of the TX to RX leakage. For example, during calibration, the dual-radio device may transmit a known test signal and analyze its distortion as received in (leaked into) the RX. Note that during the calibration we can transmit and receive on the same carrier frequency.

Regarding TX INL, TX INL may be calibrated separately as part of TX requirements. Because the residual TX-INL may have a much smaller effect on the overall distortion due to the TX-EVM requirements and due to the RX using a wide-range GM amplifier (backed-up by digital-PD, to overcome a much stronger distortion). Nevertheless, any residual TX-INL may be calibrated as part of RX-INL calibration as noted above (because the TX-leakage may be used to calibrate the RX-INL). The calibration flow may not need to distinguish between them. Because the RX non-linearities may be dominated by the TX-blocker and the digital-PD may utilize the baseband version of the TX-signal (BB-TX signal) as a reference, both the TX and RX paths may be considered as a combined non-linearity-distortion.

As noted above, the impacts of the LPF may need to be accounted for when inverting the INL-caused distortion to recover the desired signal. One or more bandpass filters (BPF) and one or more LPFs in the RX chain may be necessary for filtering-out spurious signals in neighboring bands to the desired signal. But such filters may further complicate the correction of the INL distortions. For example, the non-linearities may cause an expansion of the signal's bandwidth and the LPF may distort the out-of-band skirt. Therefore, as noted earlier, simply inverting the INL directly on the observation (y) for the received signal may not return the desired signal.

$$z = f_{INL}(x) \quad \rightarrow \quad x = f_{INL}^{-1}(z)$$

$$y = LPF\{z\} = LPF\{f_{INL}(x)\} \quad \rightarrow \quad x \neq f_{INL}^{-1}(y)$$

Due to noise enhancements, for example, it may not be possible to simply invert the LPF. Thus, an iterative approach may be used to determine which estimated x with narrow bandwidth may best explain y in the equations above. Because x is defined as a communication signal (e.g. OFDM), it also has a defined bandwidth (BW). $x == LPF\{x\}$.

The iterative approach may be used by the PD scheme to the result, as shown in the example iteration below:

$$x_0 = f_{INL}^{-1}(y)$$

for

$$n = 0{:}N$$

$$x_n^{LPF} = LPF\{x_n\}$$

$$\hat{z}_n = f_{INL}(x_n^{LPF})$$

$$\hat{y}_n = LPF\{\hat{z}_n\}$$

$$\hat{z}^c{}_n = y + (\hat{z}_n - \hat{y}_n)$$

$$x_{n+1} = f_{INL}^{-1}(\hat{z}^c{}_n)$$

next n

In summarized terms, if z were already known, x could be calculated by inverting the INL. But z is only available after the LPF (y). Thus, the difference between z and y may be "recovered." To do this in the iteration, an unknown (naive) guess may be used to start with as $x_0$, and then $x_0$ may be used to estimate the information that was "lost" in the LPF, which may be determined from the difference between z and y: $(\hat{z}_n - \hat{y}_n)$. Generally, this may be a relatively fast convergence, possibly converging in only 2 to 3 iterations.

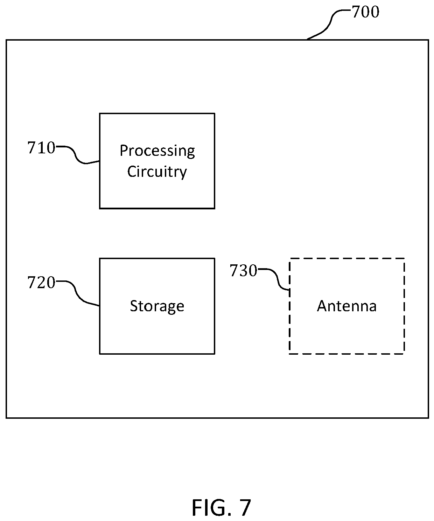

FIG. 7 is a schematic drawing illustrating a device 700 for applying a post distortion scheme to recover a desired signal from a received signal. The device 700 may include any of the features with respect to the PD schemes discussed above and any of FIGs. 1-6. FIG. 7 may be implemented as a device, a system, a method, and/or a computer readable medium that, when executed, performs the features of the PD schemes described above. It should be understood that device 700 is only an example, and other configurations may be possible that include, for example, different components or additional components.

Device 700 includes a processing circuitry 710 and a storage 720. Processing circuitry 710 is configured to cause antenna 730 to simultaneously transmit a transmitted signal and receive a received signal, the received signal may include a desired signal to be recovered from the received signal. Processing circuitry 710 is also configured to cause a gain block to amplify the received signal and a leaked portion of the transmitted signal into an amplified composite signal. Processing circuitry 710 is also configured to determine a distortion of the gain block on the received signal based on the transmitted signal. Processing circuitry 710 is also configured to apply to the amplified composite signal an inversion of the distortion to recover the desired signal from the received signal.

Furthermore, in addition to or in combination with any of the features described in this or the preceding paragraph with respect to device 700, processing circuitry 710 may be configured to determine an estimate of the leaked portion of the transmitted signal, wherein the distortion is based on the estimate. Furthermore, in addition to or in combination with any of the features described in this or the preceding paragraph, the distortion of the gain block may be based on a cross modulation in the gain block between the desired signal and the leaked portion of the transmitted signal. Furthermore, in addition to or in combination with any of the features described in this or the preceding paragraph, the distortion of the gain block may be based on amplitude-amplitude distortions or amplitude-phase distortions in the leaked portion of the transmitted signal. Furthermore, in addition to or in combination with any of the features described in this or the preceding paragraph, the transmitted signal and the received signal may be wireless signals in a wireless communication system.

Furthermore, in addition to or in combination with any of the features described in this or the preceding two paragraphs, device 700 may include a dual-radio wireless station (STA) in a mobile communication network. Furthermore, in addition to or in combination with any of the features described in this or the preceding two paragraphs, the transmitted signal may be in a first channel and the received signal may be in a second channel that is different from the first channel. Furthermore, in addition to or in combination with any of the features described in this or the preceding two paragraphs, the first channel may be in a same radio frequency band as the second channel. Furthermore, in addition to or in combination with any of the features described in this or the preceding two paragraphs, device 700 may include a filter block after the gain block to filter out the leaked portion of the received signal. Furthermore, in addition to or in combination with any of the features described in this or the preceding two paragraphs, the distortion may include a non-linearity response of the gain block based on a baseband envelope of the leaked portion of the transmitted signal.

Furthermore, in addition to or in combination with any of the features described in this or the preceding three paragraphs with respect to device 700, the processing circuitry 710 configured to apply to the amplified composite signal the inversion of the distortion may include processing circuitry 710 configured to cancel an effect of the leaked portion of the transmitted signal on the desired signal. Furthermore, in addition to or in combination with any of the features described in this or the preceding three paragraphs, device 700 may further include antenna 730 configured to simultaneously transmit the transmitted signal and receive the received signal. Furthermore, in addition to or in combination with any of the features described in this or the preceding three paragraphs, storage 720 may include a memory. Furthermore, in addition to or in combination with any of the features described in this or the preceding three paragraphs, the inversion of the distortion may be based on an iteration that reconstructs an out-of-band frequency. Furthermore, in addition to or in combination with any of the features described in this or the preceding three paragraphs, the out-of-band frequency may include a filtered portion of the received signal.

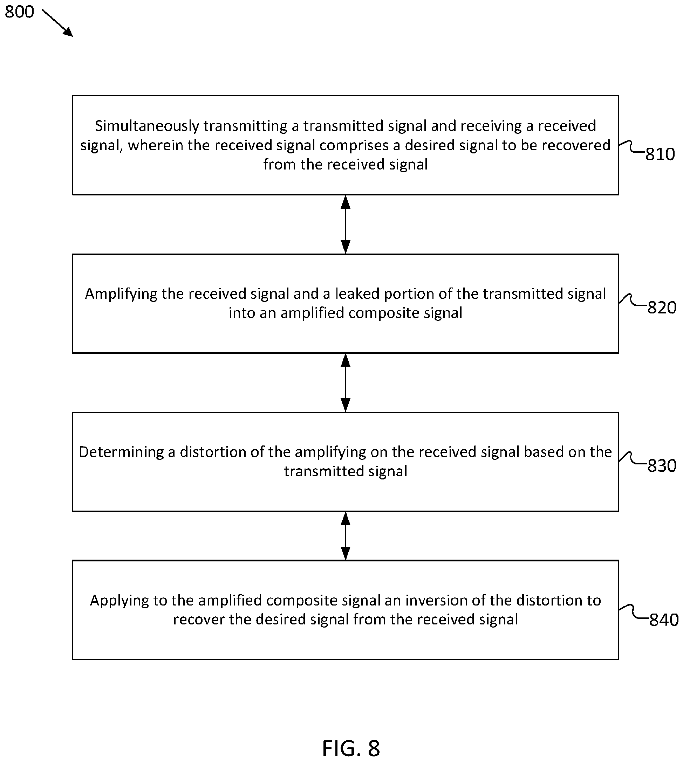

FIG. 8 depicts a schematic flow diagram of a method 800 for applying a post-distortion scheme to recover a desired signal from a received signal. Method 800 may implement any of the features discussed above with respect to the backplate assembly discussed above and/or with respect to FIGs. 1-7. Method 800 includes, in 810, simultaneously transmitting a transmitted signal and receiving a received signal, wherein the received signal includes the desired signal to be recovered from the received signal. Method 800 also includes, in 820, amplifying the received signal and a leaked portion of the transmitted signal into an amplified composite signal. Method 800 also includes, in 830, determining a distortion of the amplifying on the received signal based on the transmitted signal. Method 800 also includes, in 840, applying to the amplified composite signal an inversion of the distortion to recover the desired signal from the received signal.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A device comprising processing circuitry connected to storage, the processing circuitry configured to:

   cause an antenna to simultaneously transmit a transmitted signal and receive a received signal, wherein the received signal comprises a desired signal to be recovered from the received signal;

cause a gain block to amplify the received signal and a leaked portion of the transmitted signal into an amplified composite signal;

determine a distortion of the gain block on the received signal based on the transmitted signal; and

apply to the amplified composite signal an inversion of the distortion to recover the desired signal from the received signal.

2. The device of claim 1,
wherein the processing circuitry is configured to determine an estimate of the leaked portion of the transmitted signal, wherein the distortion is based on the estimate.

3. The device of any one of claims 1 or 2,
wherein the distortion of the gain block is based on a cross modulation in the gain block between the desired signal and the leaked portion of the transmitted signal.

4. The device of any one of claims 1 to 3,
wherein the distortion of the gain block is based on amplitude-amplitude distortions or amplitude-phase distortions in the leaked portion of the transmitted signal.

5. The device of any one of claims 1 to 4,
wherein the transmitted signal and the received signal are wireless signals in a wireless communication system.

6. The device of any one of claims 1 to 5,
wherein the device comprises a dual-radio wireless station (STA) in a mobile communication network.

7. The device of any one of claims 1 to 6,
wherein the transmitted signal is in a first channel and the received signal is in a second channel that is different from the first channel; preferably wherein the first channel is in a same radio frequency band as the second channel.

8. The device of any one of claims 1 to 7, the device further comprising:
a filter block after the gain block to filter out the leaked portion of the received signal.

9. The device of any one of claims 1 to 8,
wherein the distortion comprises a non-linearity response of the gain block based on a baseband envelope of the leaked portion of the transmitted signal.

10. The device of any one of claims 1 to 9,
wherein the processing circuitry configured to apply to the amplified composite signal the inversion of the distortion comprises the processing circuitry configured to cancel an effect of the leaked portion of the transmitted signal on the desired signal.

11. The device of any one of claims 1 to 10, the device further comprising:
the antenna configured to simultaneously transmit the transmitted signal and receive the received signal; preferably wherein the storage comprises a memory.

12. The device of any one of claims 1 to 11,
wherein the inversion of the distortion is based on an iteration that reconstructs an out-of-band frequency; preferably wherein the out-of-band frequency comprises a filtered portion of the received signal.

13. A wireless transceiver system comprising:

an antenna configured to simultaneously transmit a transmitted signal and receive a received signal, wherein the received signal comprises a desired signal to be recovered from the received signal;
a gain block configured to amplify into an amplified composite signal the received signal and a leaked portion of the transmitted signal; and
processing circuitry configured to:

determine a distortion of the gain block on the received signal based on the leaked portion of the transmitted signal; and

apply to the amplified composite signal, after the gain block, an inversion of the distortion to recover the desired signal from the received signal.

14. The wireless transceiver system of claim 13,
   wherein the distortion comprises a non-linearity response of the gain block based on a baseband envelope of the leaked portion of the transmitted signal; preferably wherein the inversion of the distortion is based on an iteration that reconstructs an out-of-band frequency.

15. A method comprising:

   simultaneously transmitting a transmitted signal and receiving a received signal, wherein the received signal comprises a desired signal to be recovered from the received signal;
   amplifying the received signal and a leaked portion of the transmitted signal into an amplified composite signal;
   determining a distortion of the amplifying on the received signal based on the transmitted signal; and
   applying to the amplified composite signal an inversion of the distortion to recover the desired signal from the received signal;
   preferably the method further comprising determining an estimate of the leaked portion of the transmitted signal, wherein the distortion is based on the estimate.

FIG. 1

FIG. 2

EP 4 664 773 A1

FIG. 3

EP 4 664 773 A1

FIG. 4

FIG. 5

EP 4 664 773 A1

600

$DES_{pwr}$=-52[dB]  $BW_{des}$=80[MHz]  $BW_{blk}$=160[MHz]  $F_{offset}$=1000[MHz]

FIG. 6

FIG. 7

800

Simultaneously transmitting a transmitted signal and receiving a received signal, wherein the received signal comprises a desired signal to be recovered from the received signal — 810

Amplifying the received signal and a leaked portion of the transmitted signal into an amplified composite signal — 820

Determining a distortion of the amplifying on the received signal based on the transmitted signal — 830

Applying to the amplified composite signal an inversion of the distortion to recover the desired signal from the received signal — 840

FIG. 8

Europäisches
Patentamt
European
Patent Office
Office européen
des brevets

# EUROPEAN SEARCH REPORT

**Application Number**

EP 25 16 9127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/103455 A1 (FORRESTER ARACELY W [US] ET AL) 5 May 2011 (2011-05-05) * paragraph [0032] - paragraph [0058]; figures 2-8 * ----- | 1-15 | INV. H04B1/525 |
| X | US 2023/016762 A1 (SHIH HUEI YUAN [US]) 19 January 2023 (2023-01-19) * paragraph [0043] - paragraph [0072]; figures 2-6b * ----- | 1-15 | |
| A | US 2014/140250 A1 (KIM ANDREW JOO [US] ET AL) 22 May 2014 (2014-05-22) * the whole document * ----- | 1-15 | |

**TECHNICAL FIELDS SEARCHED (IPC)**

H04B

The present search report has been drawn up for all claims

| Place of search | Date of completion of the search | Examiner |
|---|---|---|
| Munich | 12 September 2025 | Ayala Perriello, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 25 16 9127**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-09-2025**

| Patent document cited in search report | Publication date | Patent family member(s) | | Publication date |
|---|---|---|---|---|
| US 2011103455 A1 | 05-05-2011 | TW | 201138326 A | 01-11-2011 |
| | | US | 2011103455 A1 | 05-05-2011 |
| | | WO | 2011053855 A1 | 05-05-2011 |
| US 2023016762 A1 | 19-01-2023 | CN | 115298978 A | 04-11-2022 |
| | | US | 2023016762 A1 | 19-01-2023 |
| | | WO | 2021092633 A2 | 14-05-2021 |
| US 2014140250 A1 | 22-05-2014 | US | 2014140250 A1 | 22-05-2014 |
| | | US | 2018026673 A1 | 25-01-2018 |
| | | WO | 2014085105 A1 | 05-06-2014 |

EPO FORM P0459

For more details about this annex : see Official Journal of the European Patent Office, No. 12/82